# EUROPÄISCHE PATENTSCHRIFT

(11) **EP 2 071 698 B1**
(45) Veröffentlichungstag und Bekanntmachung des Hinweises auf die Patenterteilung: **10.10.2012**
(21) Anmeldenummer: 08021430.7
(22) Anmeldetag: 10.12.2008
(51) Int. Cl.: H02J 9/00, H01R 27/00, H01R 24/00, H01R 107/00

(54) **Verfahren und Versorgungssystem für den Betrieb von einer Mehrzahl von unabhängigen elektrischen Vorrichtungen sowie elektrische Vorrichtung**
Method and supply system for the operation of multiple independent electrical appliances and electrical apparatus
Procédé et système d'alimentation pour l'opération de plusieurs dispositifs électriques independents et dispositif électrique

(30) Priorität: 11.12.2007 DE 102007059838
(43) Veröffentlichungstag der Anmeldung: 17.06.2009
(73) Patentinhaber: Deutsches Zentrum für Luft- und Raumfahrt e.V., 51147 Köln (DE)
(72) Erfinder: Tank, Volker, 82279 Eching (DE); Voss, Hans, 82234 Weßling (DE)
(74) Vertreter: Albrecht, Ralf

(56) Entgegenhaltungen:
- EP-A- 1 798 837
- US-A1- 2003 230 934
- US-A1- 2004 119 454
- US-A1- 2005 156 564
- US-A1- 2006 119 104
- US-A1- 2006 220 467
- US-B1- 6 371 768
- US-B1- 6 525 666

## Beschreibung

Die vorliegende Erfindung betrifft ein Verfahren und ein Versorgungssystem für den Betrieb von einer Mehrzahl von unabhängigen elektrischen Vorrichtungen, insbesondere von Geräten der Unterhaltungselektronik nach dem Oberbegriff der Ansprüche 1 und 6.

Die Erfindung betrifft des weiteren eine elektrische Vorrichtung, insbesondere der Unterhaltungselektronik nach dem Oberbegriff von Anspruch 11.

Elektronische Geräte, wie sie beispielsweise aus der Druckschrift US 2006/0220467 A1 bekannt sind, und die im privaten Bereich genutzt werden, verfügen heutzutage über drei Betriebszustände "Ein", "Aus" und "Hereitschaftsbetrieb" (Stand-by). Dies gilt insbesondere für Geräte der Unterhaltungselektronik wie zum Beispiel Fernseher, externe Rundfunkempfänger (Receiver), HiFi-Komponenten oder auch Computer. Die Geräte sind an eine Energiequelle in Form einer Wechselspannungsquelle angeschlossen. Im Zustand "Aus" sind die Geräte vollkommen abgeschaltet, d.h. sie sind von der Versorgungsspannung getrennt. Im Zustand "Stand-by" befinden sich die Geräte in einem Wartezustand, wobei die zweckbestimmte Funktion, wie zum Beispiel das Anzeigen von Fernsehbildern auf einem Bildschirm, deaktiviert ist und nur eine Stand-by-Schaltung aktiv ist, um die zweckbestimmte Funktion aktivieren zu können. Das Gerät ist im Stand-by-Zustand also an die Wechselspannung angeschlossen. Im dritten Betriebszustand "Ein" führt das Gerät die zweckbestimmte Funktion aus, d.h. zum Beispiel der Fernseher zeigt Fernsehbilder auf dem Bildschirm an. Auch Geräte, die nur über die beiden Betriebszustände "Ein" und "Stand-by" verfügen wie zum Beispiel Videorecorder oder auch Receiver, bei denen eine permanente Verfügbarkeit gefordert ist, sind bekannt. Da diese Geräte keinen Ausschalter aufweisen, kann der Betriebszustand "Aus" nur durch Ziehen des Netzsteckers oder durch eine zusätzliche externe Schaltvorrichtung, z.B. eine schaltbare Steckerleiste, erzwungen werden.

Sehr weit verbreitet ist die Bedienung von Geräten der Unterhaltungselektronik mit einer Fernbedienung und zwar insbesondere was einen Wechsel von Betriebszustand "Stand-by" in den Betriebszustand "Ein" betrifft. Dazu umfasst die Stand-by-Schaltung in der Regel eine Empfangsvorrichtung für den Empfang von Fernsteuersignalen, die von einer separaten Fernsteuervorrichtung (Fernbedienung) bedient wird, indem von der Fernbedienung Steuersignale in der Form von Infrarot- oder Funksignalen zu der Empfangsvorrichtung der Stand-by-Schaltung übertragen werden.

Geräteseitig ist der Stand-by-Betrieb manchmal ein wesentlicher Bestandteil, um den Gerätezweck erfüllen zu können. Das ist zum Beispiel der Fall, wenn zeitgesteuert die Aufnahme von Videosignalen mit einem Videorecorder durchgeführt werden soll, um eine automatische Aktivierung der zweckbestimmten Funktion durchzuführen. Andererseits weisen beispielsweise Receiver oft keinen Betriebszustand "Aus" mehr auf, so dass diese Geräte wenigstens im Betriebsmodus Stand-by betrieben werden. Der dauerhafte Stand-by-Zustand wird dabei von den Nutzern als komfortabel empfunden und durchaus gewünscht.

Neben der hohen Akzeptanz der Stand-by-Schaltungen durch die Verbraucher ist es teilweise auch notwendig, die Geräte dauerhaft im "Stand-by" zu betreiben, da abgespeicherte Geräteeinstellungen, wie zum Beispiel eine Senderliste im Receiver bei einer Unterbrechung der Stromzufuhr verloren gehen können.

Die Stand-by-Schaltungen erfordern für den Betrieb in der Regel eine Gleichspannung, die je nach Gerätetyp und -hersteller variieren kann, jedoch meisten unterhalb von 24V liegt. Teilweise arbeiten die Geräte intern ebenfalls mit einer Gleichspannung, bei einer zunehmenden Zahl neuer Geräte sogar ausschließlich. Beispielsweise nutzt ein Röhrenfernseher intern direkt eine Wechselspannung, wohingegen ein Flachbildfernseher ausschließlich eine Gleichspannung nutzt. Deshalb verfügen die elektronischen Geräte über ein Netzteil, um die bereitgestellte Wechselspannung in die benötigte Gleichspannung, die eine Niedervolt-Gleichspannung ist, umzuwandeln. Dieses Netzteil umfasst einen Transformator, der zunächst die Spannung auf den benötigen Wert einstellt, und außerdem eine Gleichrichterschaltung, welche die transformierte Wechselspannung in eine Gleichspannung umwandelt. Die Netzteile erzeugen im Betrieb kontinuierlich Abwärme, die bereits durch das Anlegen der Wechselspannung an den Transformator entsteht.

Diese Verlustleistung in Form der Abwärme hängt wesentlich von der Dimensionierung des Transformators ab, die von dem Gesamtenergiebedarf des Gerätes bestimmt wird, und nur ein Teil der Verluste wird durch die Menge der im Betrieb transformierten Energie bestimmt. Daher sind im Stand-by-Betrieb, in dem nur die Stand-by-Schaltung mit der Gleichspannung versorgt wird, die wärmeverluste überproportional groß verglichen mit dem relativ geringen Energiebedarf der Stand-by-Schaltung selber. Schätzungen gehen von einem Mittelwert von 5W Aufnahmeleistung pro Geräte im Stand-by-Betrieb aus, was sich jedoch aufgrund der großen Anzahl von Geräten mit Stand-by-Schaltung im Jahr allein in Deutschland auf etwa 18 Mrd. kWh summiert. Dies entspricht näherungsweise der vollständigen Jahresproduktion von zwei Kernkraftwerken (Quelle: Frauenhoferinstitut System- und Innovationsforschung, Presseinformation 07 01/2007). Die für die Stand-by-Schaltungen benötige Energie wird wie heutzutage üblich aus den Versorgungsnetzen entnommen, über die praktisch alle Haushalte mit elektrischer Energie versorgt werden.

Nachteilig wird an diesem Stand der Technik angesehen, dass die Stand-by-Schaltungen kontinuierlich mit Energie versorgt werden müssen, weshalb über den Transformator und den Gleichrichter ständig elektrische Energie bereitgestellt werden muss. Insbesondere im Transformator entstehen große Verluste, die durch die notwendige wiederholte ummagnetisierung des Metallkerns herbeigeführt werden. Da der Eisenkern jedoch konstruktiv notwendig ist, um einen akzeptablen Wirkungsgrad des Transformators zu erreichen, lassen sich diese verluste nicht vermeiden.

Ein weiterer Nachteil besteht darin, dass elektronische Geräte üblicherweise auch für den Normalbetrieb eine Gleichspannung erfordern und die Transformatoren deshalb so ausgelegt sind, dass sie auch in diesem Normalbetrieb nicht überlastet werden. Damit sind sie für den Bereitschaftsbetrieb überdimensioniert. Die Verluste hängen jedoch nur zu einem Teil von der Auslastung des Transformators ab, weshalb hier das Verhältnis von Nutzleistung zu Verlustleistung besonders ungünstig ist. Auch wird als Nachteil angesehen, dass bereits bei der Erzeugung der elektrischen Wechselspannung, mit der die elektronischen Geräte betrieben werden, Verluste entstehen. Des weiteren tragen zunehmend regenerative Energiequellen zur Energieversorgung bei, die direkt eine Gleichspannung erzeugen.
Hier ist es besonders nachteilig, dass die Gleichspannung für den Transport zum Verbraucher zunächst in eine Wechselspannung umgewandelt wird, so dass sogar zweimal Wandlungsverluste anfallen.

Aufgabe der vorliegenden Erfindung ist es daher, den Energieverbrauch von elektronischen Vorrichtungen zu reduzieren, insbesondere im Bereitschaftsbetrieb.

Diese Aufgabe wird bei einem Verfahren der eingangs genannten Art durch die kennzeichnenden Merkmale von Anspruch 1 gelöst. Die Aufgabe wird außerdem durch ein Versorgungssystem gemäß dem kennzeichnenden Teil von Anspruch 6 gelöst, in dem dieses Verfahren angewendet wird. Schließlich wird die Aufgabe bei einer elektrischen Vorrichtung gemäß dem kennzeichnenden Teil von Anspruch 11 gelöst.

Grundgedanke der Erfindung ist also, elektrische oder elektronische Vorrichtungen, die eine Gleichspannungskomponente etwa in Form einer Stand-by-Schaltung aufweisen und kontinuierlich betrieben werden, also Geräte wie beispielsweise Fernseher oder Receiver, zusätzlich mit einer externen Gleichspannung zu versorgen. Die Stand-by-Schaltung wird mit der externen Gleichspannung und kontinuierlich betrieben und kann die Hauptfunktion der Geräte, also z.B. das Anzeigen eines Fernsehbildes oder die Decodierung von Rundfunksignalen, durch eine Schaltvorrichtung starten und beenden. Die Hauptfunktion der Geräte wird dabei an einer Wechselspannungsquelle betrieben und von dieser im Stand-by-Modus vollständig getrennt, somit fallen in den Geräten keine Verluste in Form von Abwärme durch die Transformation von Wechselspannung in Gleichspannung an. Dabei wird die Verteilung der Gleich- und Wechselspannung parallel durchgeführt, wobei dann die Anschlüsse für Gleich- und Wechselspannung zweckmäßigerweise benachbart angeordnet sind, so dass sie gemeinsam für die Versorgung eines elektrischen Geräts genutzt werden können.

Gemäß der Erfindung weist die zentrale Gleichspannungsquelle einen Gleichspannungserzeuger in der Form einer erneuerbaren Energiequelle auf und wird eine von diesem unmittelbar erzeugte Gleichspannung zur Versorgung der elektrischen Vorrichtungen verwendet. Durch die Verwendung erneuerbarer Energiequellen, die direkt eine Gleichspannung erzeugen, kann die Umweltbelastung reduziert werden, da eine Umweltverschmutzung durch die Verbrennung von fossilen Energieträgern entfällt. Die lokale Verwendung der erneuerbaren Energiequellen führt dazu, dass die von ihnen erzeugte Gleichspannung nicht erst über eine große Entfernung transportiert werden muss, sondern direkt zur Verfügung steht, wodurch Transportverluste minimiert werden.

Insbesondere kann als Gleichspannungserzeuger ein fotovoltaischer Solarkollektor und/oder eine Kleinwindkraftanlage eingesetzt werden. Diese beiden Energieerzeuger werden bereits in weiten Bereichen eingesetzt, so dass ihr hoher Wirkungsgrad und auch die vergleichsweise geringen Kosten den Einsatz dieser Systeme nahelegen. So kann z.B. eine Kleinwindkraftanlage neben einem Haus betrieben werden, während ein Solarkollektor z.B. auf einem Hausdach oder selbst auf dem Balkon einer Wohnung platziert werden kann. Da beide Systeme jedoch keine kontinuierliche Energiegewinnung gewährleisten, ist eine Kombination verschiedener Gleichspannungserzeuger durchaus sinnvoll, um die Energieversorgung möglichst kontinuierlich zu gewährleisten. Auch der Einsatz weiterer nicht benannter Gleichspannungserzeuger ist hier einzeln oder in Kombination möglich, wobei jeweils die lokalen Gegebenheiten wie z.B. Sonneneinstrahlung, durchschnittliche Windstärke und andere Einflussfaktoren für den Betrieb der regenerativen Energiequellen zu berücksichtigen sind.

Außerdem kann die zentrale Gleichspannungsquelle einen Energiespeicher aufweisen. Damit können Energiegewinnung und Energieverbrauch entkoppelt werden, so dass der Betrieb der elektrischen Geräte unabhängig von nicht kontrollierbaren äußeren Einflüssen wird, indem wie z.B. bei fehlendem Wind oder dem Verdecken der Sonne durch Wolken die Energie aus dem Speicher entnommen werden kann. Der Energiespeicher kann beispielsweise ein elektrischer Energiespeicher, insbesondere ein Akkumulator, sein. Derartige Akkumulatoren sind hinlänglich bekannt und stellen eine effiziente und kostengünstige Möglichkeit dar, um Energie aus einem Gleichspannungserzeuger zu speichern.

Wenn die Stand-by-Schaltung auch über eine Empfangs- und Decodiereinrichtung für Fernsteuersignale verfügt, wird die Stand-by-Schaltung in der Regel auch dann betrieben, wenn die Hauptfunktion des Geräts aktiv ist, damit weiterhin Fernsteuersignale empfangen werden können. In diesem Betriebsmodus kann die Stand-by-Schaltung entweder weiter von der zentralen Gleichspannungsquelle versorgt werden, oder auch von einem in dem Gerät vorgesehenen Netzteil, insbesondere wenn das Gerät intern wenigstens teilweise mit einer Gleichspannung betrieben wird. Eine derartige Umschaltung kann dann vorteilhaft sein, wenn vorhandene Geräte nach dem erfindungsgemäßen Verfahren betrieben werden sollen, um dabei die Modifikationen an den Geräten zu minimieren. Auch kann dies eine weitere Optimierung darstellen, wenn im Betriebsmodus "Ein" die Wandlungsverluste geringer sind als die Leitungsverluste auf dem Abschnitt der Gleichspannungsleitung zwischen der Gleichspannungsquelle und dem Gerät.

Das elektrische Gerät kann auch nur eine Gleichspannungskomponente aufweisen und beispielsweise eine Kontakt- und Ladevorrichtung sein, über die externe elektrische Akkumulatoren, insbesondere von oder in Mobil- und/oder Fernsteuergeräten, ladbar sind. In diesem Fall wird keine weitere elektrische Komponente, insbesondere keine Wechselspannungskomponente, verwendet und die Ladefunktion stellt die Hauptfunktion dar. Da elektrische Akkumulatoren mit einer Gleichspannung geladen werden, bietet sich bei diesen Ladevorrichtungen der Anschluss an eine externe Gleichspannungsversorgung besonders an, da das Transformieren und Gleichrichten im Gerät mit den damit einhergehenden Verlusten entfällt. Auch ist der Energiebedarf für das Laden elektrischer Akkumulatoren gering, so dass die Gleichspannungsquelle für den Betrieb der LadeVorrichtung nicht besonders dimensioniert werden muss. Damit können beispielsweise Akkumulatoren in Fernbedienungen eingesetzt und bei Bedarf aufgeladen werden, so dass die Verwendung von Einwegbatterien, die üblicherweise als Sondermüll entsorgt werden müssen, in den Fernbedienungen entfällt. Auch der Betrieb anderer Gleichspannungsgeräte ist möglich, insbesondere wenn sie ebenfalls nur wenig Energie verbrauchen.

Vorteilhafterweise können die elektrischen Vorrichtungen in einer abgeschlossenen Versorgungseinheit, insbesondere einer Wohnung, einem Haus oder einem Gebäudekomplex, über die der Versorgungseinheit zugeordnete zentrale Gleichspannungsquelle und die Wechselspannungsquelle versorgt werden, wobei beide Spannungsquellen über ein gemeinsames elektrisches Leitungssystem in der Versorgungseinheit mit den elektrischen Vorrichtungen verbindbar sind.

Die Leitungsverluste bei der Übertragung einer Gleichspannung hängen wesentlich von den zwei Faktoren Stromstärke und Leitungslänge ab. Daher ist es nicht sinnvoll, eine Gleichspannung, insbesondere eine Niedervolt-Gleichspannung, über große Entfernungen zentral zur Verfügung zu stellen, sondern diese lediglich innerhalb der lokalen Versorgungseinheiten zentral bereitzustellen. Beispielsweise wird eine Wohnung, ein Haus oder auch ein Gebäudekomplex mit einer abgeschlossenen Gleichspannungsversorgung ausgestattet, über die alle Geräte in dieser Versorgungseinheit mit Gleichspannung versorgt werden können. Dadurch sind die Versorgungslängen der Leitungen beschränkt und es ist sichergestellt, dass die Energieeinsparung durch den Verzicht auf den Betrieb der Transformatoren in den Geräten nicht durch erhöhte Leitungsverluste egalisiert wird. Dafür ist zu beachten, dass die niedrige Gleichspannung größere Ströme erfordert, um die selbe Energie zu übertragen, wobei die Leitungsverluste jedoch quadratisch mit dem Strom steigen. Eine Positionierung der Geräte unter Berücksichtigung des Energiebedarfs führt also zu einer weiteren Reduktion des Energiebedarfs.

Zweckmäßigerweise umfasst die zentrale Gleichspannungsquelle eine Steuerungsvorrichtung, welche die Speicherung von Energie in dem Energiespeicher und deren Abgabe daraus steuert. Somit können die Speicherung und die Abgabe von Energie gezielt gesteuert werden. Die Steuerungsvorrichtung kann zusätzlich zur Wartung und Pflege der Energiespeicher, z.B. durch das Anwenden bestimmter Lade- oder Entladezyklen und zur Vermeidung von Überladung des Energiespeichers, eingesetzt werden. So erfordert beispielsweise der Betrieb bestimmter Typen von elektrischen Akkumulatoren ein vollständiges Entladen, um die Speicherkapazität dieser Akkumulatoren über einen langen zeitraum aufrecht zu erhalten, während andere Akkumulatoren durch eine tiefe Entladung zerstört werden können, weshalb diese Tiefentladung unbedingt verhindert werden muss.

Alternativ können die Gleich- und Wechselspannung in einem gemeinsamen Anschluss bereitgestellt und die elektrischen Vorrichtungen über eine einzige Verbindung mit Gleich- und Wechselspannung versorgt werden. Dadurch können elektrische Vorrichtungen in bisher üblicher Weise mit Energie versorgt werden, ohne dass ein Benutzer sich der Besonderheit der Energieversorgung und der elektrischen Geräte bewusst sein muss. Das Anschlusskabel z.B. des Fernsehers kann also wie gehabt in die Steckdose eingesteckt werden.

Für die Verwendung der Geräte an dem Versorgungssystem wird erfindungsgemäß ein Steckadaptersystem zur Verfügung gestellt, das zusätzlich zu zwei Kontakten zum Anschluss an die externe Wechselspannung zwei Kontakte zur Verbindung mit der Gleichspannungsquelle aufweist. Die elektrischen Anschlüsse für die Gleich- und Wechselspannung können also über einen gemeinsamen Steckadapter mit den Spannungsquellen verbunden werden. Dieses macht die Handhabung besonders einfach und erhöht dadurch die Akzeptanz bei den Nutzern.

Schließlich können die zwei zusätzlichen Kontakte gegenüber heute bekannten Steckadaptersystemen derart angeordnet sein, dass sie parallel versetzt von den zwei bekannten Kontakten oder um 90° um den Mittelpunkt der Kontaktfläche verdreht angeordnet sind. Dabei können als heute bekanntes Steckadaptersystem das Schutzkontakt- oder das Eurosteckersystem verwendet werden. Durch die Anordnung der zusätzlichen Kontakte in der Nähe der bisherigen Kontakte wird Kompatibilität mit den bisherigen Steckadaptersystemen gewährleistet, wobei jedoch gleichzeitig der Abstand zwischen den bisherigen und den zusätzlichen Kontakten maximiert wird, um ein falsches Verbinden zu verhindern und Schäden an den Vorrichtungen zu vermeiden. Somit müssen die Stecker der vorhandenen elektrischen Vorrichtungen nicht modifiziert werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegenden Zeichnungen verwiesen. In der Zeichnung zeigt
- Figur 1: ein erfindungsgemäßes Versorgungssystem mit drei daran angeschlossenen elektrischen Vorrichtungen,

- Figur 2: eine Detailansicht des strukturellen Aufbaus der Gleichspannungsquelle,
- Figur 3: eine Detailansicht des strukturellen Aufbaus einer Kleinwindkraftanlage,
- Figur 4: einen erfindungsgemäßen Stecker basierend auf einem Steckertyp CEE 7/7, und
- Figur 5: einen erfindungsgemäßen Stecker basierend auf einem Eurostecker.

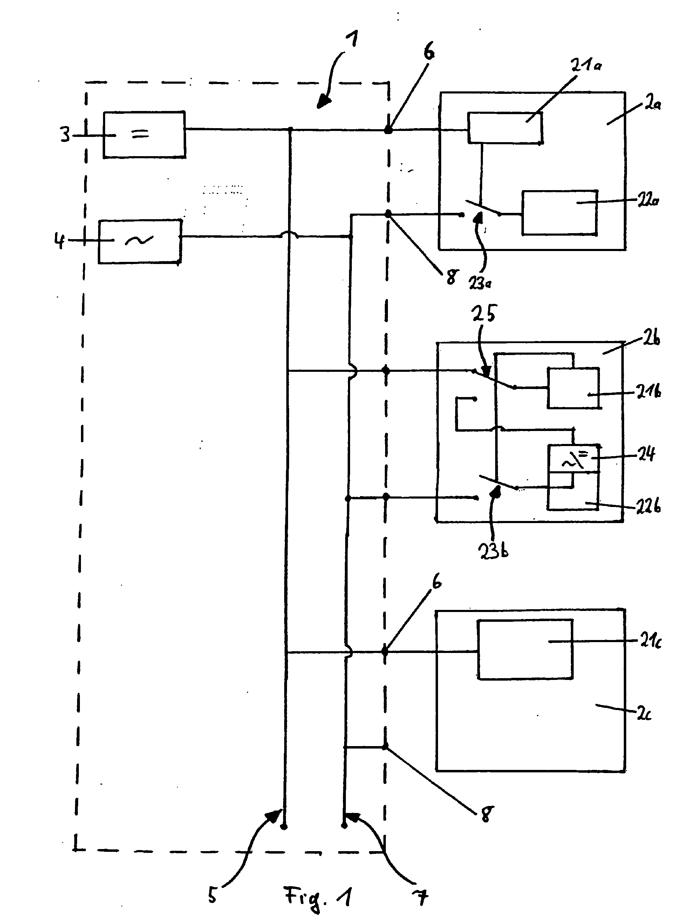

Die Figur 1 zeigt ein Versorgungssystem 1 gemäß der vorliegenden Erfindung sowie drei daran angeschlossene elektrische Vorrichtungen 2a, 2b, 2c in der Form eines Empfangsgeräts 2a für Videosignale, also eines Receivers, eines Fernsehen 2b und einer Ladevorrichtung 2c. Das Versorgungssystem 1 und die elektrischen vorrichtungen 2a, 2b, 2c befinden sich innerhalb einer Versorgungseinheit, die hier beispielsweise eine nicht weiter spezifizierte Wohnung sein soll.

Das Versorgungssystem 1 weist eine Gleichspannungsquelle 3 und eine Wechselspannungsquelle 4 auf. Das Versorgungssystem 1 ist in der Versorgungseinheit derart vorgesehen, dass die Gleichspannungsquelle 3 durch ein gemeinsames elektrisches Leitungssystem 5 mit einer Mehrzahl von Anschlüssen 6 für die Gleichspannung verbunden ist. Die zentrale Wechselspannungsquelle 4 ist über ein gemeinsames Leitungssystem 7 mit einer Mehrzahl von Anschlüssen 8 für die Wechselspannung verbunden, wobei die Anschlüsse 6, 8 für Gleich- und Wechselspannung jeweils benachbart angeordnet sind.

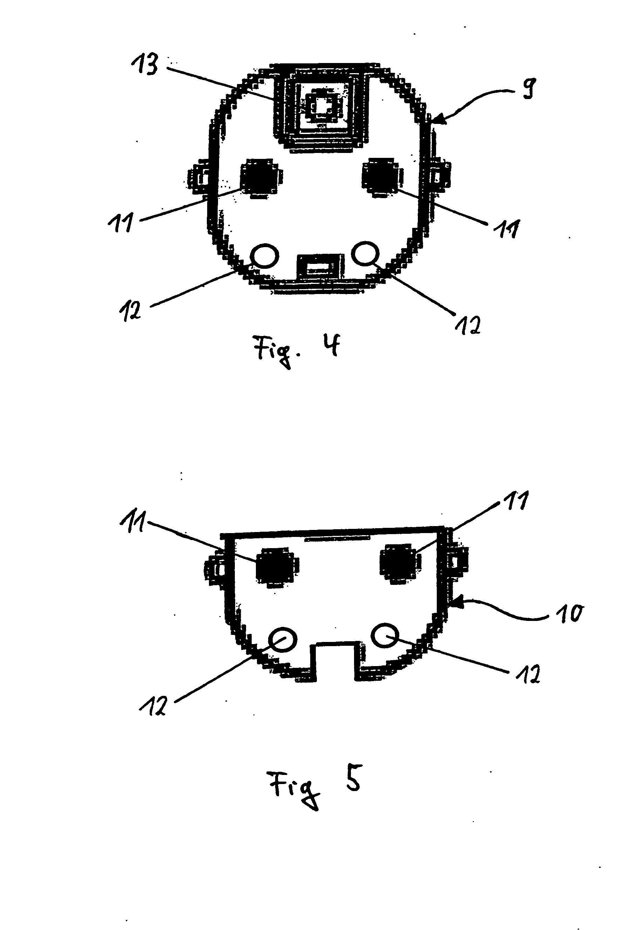

Die Anschlüsse für Gleichspannung 6 und Wechselspannung 8 können zusätzlich zusammengelegt werden, so dass ausschließlich durch die Verbindung eines erfindungsgemäßen Steckers 9, 10 die Verbindung der elektrischen Geräte 2a, 2b, 2c mit der Gleich- 3 und Wechselspannungsquelle 4 möglich ist. Dazu ist in der Figur 4 als Ausgangsbasis zunächst ein Schuko-Stecker nach CEE 7/7 gezeigt, bei dem zusätzlich zu wechselspannungskontakten 11 Gleichspannungskontakte 12 vorgesehen sind. Die Gleichspannungskontakte 12 sind dabei in einem seitlichen Bereich des Stekkers 9 parallel versetzt zu den Wechselspannungskontakten 11 angeordnet, wodurch sie einen maximalen Abstand zu den Wechselspannungskontakten 11 und einem Schutzkontakt 13, der in einem gegenüberliegenden Seitenbereich vorgesehen ist, aufweisen. Durch diese Ausführung ist außerdem ein Vertauschen der Kontakte 11, 12 ausgeschlossen. In der Figur 5 ist der Stecker 10 basierend auf einem Eurostekker gezeigt, der halbseitig erweitert wurde, wobei in dieser Halbseite die Gleichspannungskontakte 12 aufgenommen sind. Somit wird weitgehende Kompatibilität mit den bisherigen Standard-Steckersystemen bewahrt, während gleichzeitig die Benutzung der Stecker 9, 10 sehr einfach bleibt.

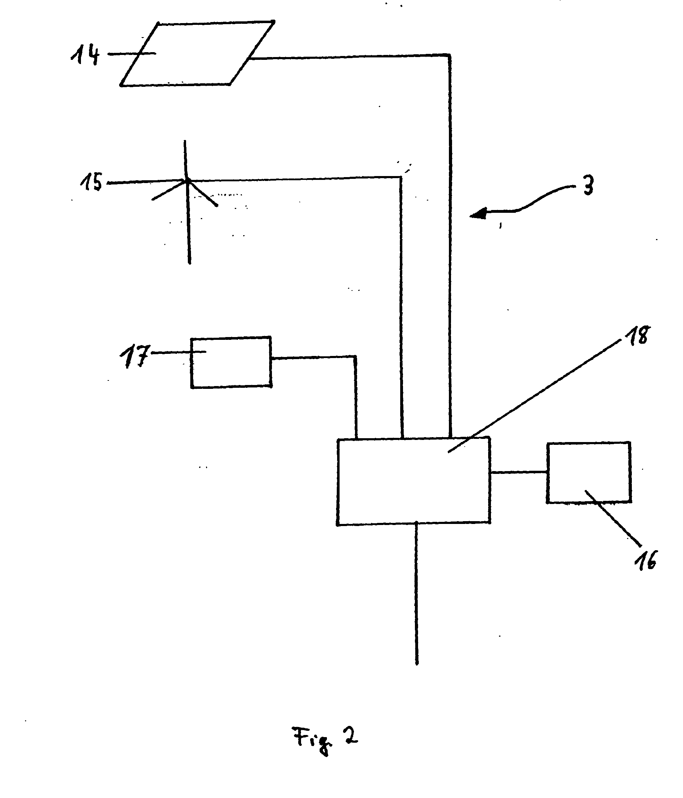

Die zentrale Gleichspannungsquelle 3 ist in der Figur 2 gezeigt und weist zwei Gleichspannungserzeuger in der Form von erneuerbaren Energiequellen 14, 15 auf. Die Gleichspannungserzeuger 14, 15 sind als ein fotovoltaischer Solarkollektor 14 und eine Kleinwindkraftanlage 15 ausgeführt, die z.B. bei einer Dachwohnung jeweils auf dem Dach angebracht sind. Die Gleichspannungsquelle 3 verfügt des weiteren über einen elektrischen Energiespeicher in Form eines Akkumulators 16, der eine Gleichspannung liefern kann, Zusätzlich verfügt die Gleichspannungsquelle 3 über eine Aufladevorrichtung 17, die eine an ein Wechselspannungsnetz angeschlossene Wandlungseinheit ist und bei Bedarf eine Gleichspannung liefert. Die Gleichspannungserzeuger 14, 15, der Akkumulator 16 und die Aufladevorrichtung 17 sind an eine Steuerungsvorrichtung 18 angeschlossen, die das Bereitstellen der Gleichspannung und die Speicherung der Energie in dem Akkumulator 16 steuert.

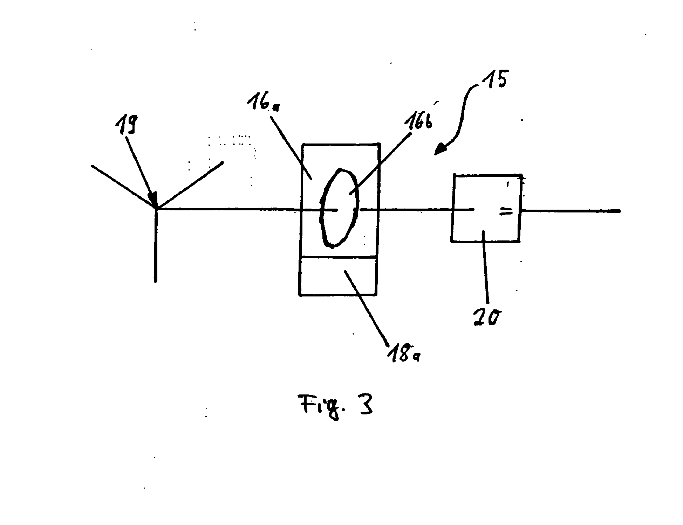

In der Figur 3 ist die Kleinwindkraftanlage 15 im Detail gezeigt. Sie ist mit einem Energiespeicher 16a und einer Steuerungsvorrichtung 18a ausgeführt, welche zwischen einem Windrad 19 und einem elektrischen Generator 20 gangeordnet sind. Der Energiespeicher 16a ist dabei als Trägheitsspeicher ausgeführt, in dem eine Schwungmasse 16b von dem Windrad 19 beschleunigt wird und durch den Generator 20 unter Erzeugung einer Gleichspannung abgebremst wird. Diese Vorgange werden über die Steuerungsvorrichtung 18a gesteuert, so dass mit dieser Anordnung eine windunabhängige und bedarfsgerechte Bereitstellung von Energie möglich ist. Damit kann diese Anordnung den elektrischen Akkumulator 16 und die Steuerungsvorrichtung 18 ersetzen, wenn ausschließlich Kleinwindkraftanlagen 15 zur Erzeugung der Gleichspannung verwendet werden. Es ist aber auch ein Betrieb zusätzlich zu dem Akkumulator 16 möglich.

Die elektrischen Vorrichtungen 2a, 2b, 2c weisen jeweils eine funktionale Gleichspannungskomponente 21a, 21b, 21c auf. Die funktionalen Gleichspannungskomponenten 21a, 21b des Receivers 2a und des Fernsehers 2b sind Stand-by-Schaltungen, deren Betrieb an der Gleichspannungsquelle 3 kontinuierlich erfolgt. Der Receiver 2a und der Fernseher 2b verfügen dafür über einen nach außen geführten Anschluss für Gleichspannung, über den sie an die externe Gleichspannungsquelle 3 angeschlossen sind. Zusätzlich weisen der Receiver 2a und der Fernseher 2b eine Wechselspannungskomponente 22a, 22b auf, für deren Betrieb sie über einen nach außen geführten Anschluss für Wechselspannung verfügen, über den sie an die Wechselspannungsquelle 4 angeschlossen sind.

Die elektrischen Geräte 2a, 2b, 2c sind intern unterschiedlich ausgeführt. Der Receiver 2a verfügt über die Stand-by-Schaltung 21a, einen Empfänger 22a und einen Schalter 23a in dem Anschluss des Empfänger 22a an für die Wechselspannung, sodass der Empfänger 22a durch die Stand-by-Schaltung 21a über das Öffnen und Schließen des Schalters 23a ein- bzw. ausschaltbar ist. Der Empfänger 22a umfasst ein nicht gezeigtes Netzteil, welches die für den Empfänger 22a intern verwendete Gleichspannung aus der angeschlossenen Wechselspannung bereitstellt.

Der Fernseher 2b verfügt über die Stand-by-Schaltung 21b und einen Bildschirm 22b, wobei auch hier der Bildschirm 22b über einen von der Stand-by-Schaltung 21b betätigbaren Schalter 23b ein- bzw. ausschaltbar ist. Gleichzeitig ist dem Bildschirm 22b ein Transformator und Gleichrichter 24 zugeordnet, der beim Betrieb des Bildschirms 22b zusätzlich in dem Gerät 2b eine Gleichspannung zur Verfügung stellt, über welche die Stand-by-Schaltung 21b versorgbar ist. Mit dem Schalter 23b ist ein Umschalter 25 gekoppelt, über den die Versorgung der Stand-by-Schaltung 21b zwischen der zentralen Gleichspannungsquelle 3 und dem Transformator und Gleichrichter 24 umschaltbar ist. Die Kopplung bewirkt, dass der Schalter 23b und der Umschalter 25 gleichzeitig betätigt werden, so dass die kontinuierliche Versorgung der Stand-by-Schaltung 21b gewährleistet ist.

Die Ladevorrichtung 2c verfügt lediglich über die Gleichspannungskomponente 21c, die mit der Gleichspannungsquelle 3 verbunden ist. Daher weist die Ladevorrichtung 2c ausschließlich einen nach außen geführten Anschluss für Gleichspannung auf. Das Laden von Akkumulatoren durch die Gleichspannungskomponente 21c stellt den Hauptbetrieb dieser Ladevorrichtung 2c dar und erfordert keine zusätzliche Wechselspannungskomponente. Über geeignete Verbindungsstücke sind unterschiedliche Akkumulatortypen oder Fernbedienungen aufladbar.

Der Receiver 2a und der Fernseher 2b sind derart umschaltbar, dass die Stand-by-Schaltung 21a, 21b und die Wechselspannungskomponente 22a, 22b jeweils allein oder zusammen betrieben werden können. Der Receiver 2a ermöglicht den Betrieb der stand-by-Schaltung 21a allein oder mit dem Empfänger 22a zusammen, abhängig von der Stellung des Schalters 23a. Der Fernseher 2b verfügt über einen zusätzlichen internen Betriebsmodus, in dem der ausschließliche Betrieb des Bildschirms 22b durch ein Deaktivieren des Transformators und Gleichrichters 24 möglich ist.

Die Stand-by-Schaltungen 2a, 2b trennen über die Schalter 23a, 23b den Empfänger 22a bzw. den Bildschirm 22b von der Wechselspannungsquelle 4. Außerdem beinhalten die Stand-by-Schaltungen 21a, 21b eine nicht gezeigte Empfangs- und Dekodiereinrichtung für den Empfang von Fernsteuersignalen. Dadurch können die Stand-by-Schaltungen 21a, 21b die Schalter 23a, 23b beim Empfang entsprechender Befehle über die Empfangs- und Dekodiereinrichtung betätigen. Die elektrischen Geräte 2a, 2b, 2c werden in dem Versorgungssystem 1 betrieben, indem die Geräte 2a, 2b, 2c gleichzeitig über die Anschlüsse 6, 8 an die Gleichspannungsquelle 3 und an die Wechselspannungsquelle 4 angeschlossen sind. Der Receiver 2a und der Fernseher 2b sind dabei dauerhaft im Stand-by-Betrieb, in dem nur die dafür zuständige Stand-by-Schaltung 21a, 21b mit Gleichspannung versorgt wird. Der restliche Teil dieser Geräte 2a, 2b ist an die Wechselspannungsquelle 4 angeschlossen, wobei während des Stand-by-Betriebe diese Verbindung über die Schalter 23a, 23b unterbrochen wird, so dass hier keine Transformationsverluste anfallen können. Beim Empfang von Fernsteuersignalen verbinden die Stand-by-Schaltungen 21a, 21b die Geräte 2a, 2b wieder mit der Wechselspannung, so dass sie normal betrieben werden können. Gleichzeitig sind die Stand-by-Schaltungen 21a, 21b weiterhin aktiv, um Fernsteuersignale zu empfangen und damit die Geräte 2a, 2b entsprechend zu beeinflussen. In dem Fernseher 2b wird dabei die Stand-by-Schaltung 21b durch die von dem Transformator und Gleichrichter 24 bereitgestellte Gleichspannung betrieben, wohingegen der Receiver 2a immer von der zentralen Gleichspannungsquelle 3 versorgt wird. Die Ladevorrichtung 2c wird ausschließlich an der Gleichspannung betrieben, da sie nur geringe Ströme für das Laden der Akkumulatoren und Fernbedienungen benötigt. Daher kann ein Transformator in diesem Gerät 2c völlig eingespart werden.

In der Gleichspannungsquelle 3 wird von dem fotovoltaischen Solarkollektor 14 und der Kleinwindkraftanlage 15 Energie in Form einer elektrischen Spannung erzeugt, die über die Steuerungsvorrichtung 18 und die gemeinsame Gleichspannungsleitung 5 den angeschlossenen elektrischen Geräten 2a, 2b, 2c zur Verfügung gestellt wird. Die Steuerungsvorrichtung 18 lädt den Akkumulator 16 auf, wenn von dem Solarkollektor 14 und der Windkraftanlage 15 mehr elektrische Energie geliefert wird, als von den elektrischen Geräten 2a, 2b, 2c gerade verbraucht wird. Wenn der Bedarf an elektrischer Energie größer ist als die aktuelle Produktion, wird zusätzlich elektrische Energie aus dem Akkumulator 16 verwendet, um den Betrieb der elektrischen Geräte 2a, 2b, 2c sicherzustellen.

Durch die Verwendung der zwei Gleichspannungserzeuger 14, 15 kann die zentrale Gleichspannungsquelle 3 selbst bei einem Ausfall eines Gleichspannungserzeugers 14, 15 immer noch ohne Einschränkungen betrieben werden. Zusätzlich schafft der Akkumulator 16 Ausfallsicherheit, da er abhängig von den angeschlossenen Geräten 2a, 2b, 2c dimensioniert ist und so die Überbrückung von üblichen Perioden sowohl ohne Sonne wie auch ohne Wind ermöglicht. Über die Aufladevorrichtung 17 kann die Gleichspannungequelle 3 direkt betrieben werden wenn sowohl die Gleichspannungserzeuger 14, 15 wie auch der Akkumulator 16 keine Energie liefern können. Auch ein das Laden des Akkumulators 16 ist mit der Aufladevorrichtung 17 möglich, wodurch die Gleichspannungsquelle 3 insgesamt unabhängig von äußeren Einflüssen ist. Da hierbei auf konventionelle Art eine Wechselspannung in eine Gleichspannung umgewandelt wird, ist dieses Verfahren mit den üblichen Wandungsverlusten belastet und daher nur im Ausnahmefall anzuwenden.

## Patentansprüche

1. Verfahren für den Betrieb von einer Mehrzahl von unabhängigen elektrischen Vorrichtungen (2a, 2b), insbesondere von Geräten der Unterhaltungselektronik, wobei die elektrischen Vorrichtungen (2a, 2b) jeweils wenigstens eine funktionale Gleichspannungskomponente, die eine Stand-by-Schaltung (21a, 21b) der elektrischen Vorrichtung (2a, 2b) ist und quasi kontinuierlich betrieben wird, und wenigstens eine weitere funktionale Komponente (22a, 22b), die als Wechselspannungskomponente ausgeführt ist, aufweisen, wobei jeweils die Stand-by-Schaltung (21a, 21b) im Bereitschaftsbetrieb über eine Gleichspannungsquelle (3) mit Energie versorgt wird und die Stand-by-Schaltung (21a, 21b) den Betrieb der wenigsten einen Wechselspannungskomponente (22a, 22b) startet und beendet, **dadurch gekennzeichnet, dass** als Gleichspannungsquelle (3) eine zentrale Gleichspannungsquelle (3) mit einem Gleichspannungserzeuger in der Form einer erneuerbaren Energiequelle (14, 15) und einem Energiespeicher (16, 16a) verwendet wird, und die Stand-by-Schaltung (21a, 21b) über einen nach außen geführten Anschluss für Gleichspannung mit einer von dem Gleichspannungserzeuger unmittelbar erzeugten Gleichspannung versorgt wird.

2. Verfahren nach Anspruch 1, **dadurch gekennzeichnet, dass** als Gleichspannungserzeuger ein photovoltaischer Solarkollektor (14) und/oder eine Kleinwindkraftanlage (15) eingesetzt wird.

3. Verfahren nach einem der Ansprüche 1 oder 2, **dadurch gekennzeichnet, dass** die weitere funktionale Komponente (22b) einen Gleichspannungsversorger (24) aufweist, der mit der Gleichspannungskomponente (21b) verbunden ist, wobei die Gleichspannungskomponente (21b) nur in einem ersten Betriebsmodus, in dem ausschließlich sie betrieben wird, von der zentralen Gleichspannungsquelle (3) versorgt wird und in einem zweiten Betriebsmodus, in dem auch die Wechselspannungskomponente (22b) betrieben wird, an dem Gleichspannungsversorger (24) betrieben wird.

4. Verfahren nach einem der vorhergehenden Ansprüche, **dadurch gekennzeichnet, dass** die elektrischen Vorrichtungen (2a, 2b) in einer abgeschlossenen Versorgungseinheit, insbesondere einer Wohnung, einem Haus oder einem Gebäudekomplex über eine der Versorgungseinheit zugeordnete zentrale Gleichspannungsquelle (3) und eine zentrale Wechselspannungsquelle (4) versorgt werden, wobei beide Spannungsquellen (3, 4) über ein gemeinsames elektrisches Leitungssystem (5, 7) in der Versorgungseinheit mit den elektrischen Vorrichtungen (2a, 2b) verbindbar sind.

5. Verfahren nach einem der vorhergehenden Ansprüche, **dadurch gekennzeichnet, dass** das Leitungssystem für die Gleich- (5) und die Wechselspannung (7) parallel ausgeführt ist und Anschlüsse für Wechsel- (8) und Gleichspannung (6) jeweils benachbart angeordnet sind, wobei insbesondere die Gleich- und die Wechselspannung in einem gemeinsamen Anschluss bereitgestellt werden und die elektrischen Vorrichtungen (2a, 2b) über eine einzige Verbindung mit Gleich- und Wechselspannung versorgt werden.

6. Versorgungssystem (1) für den Betrieb von einer Mehrzahl von unabhängigen elektrischen Vorrichtungen (2a, 2b), wobei die elektrischen Vorrichtungen (2a, 2b) jeweils wenigstens eine funktionale Gleichspannungskomponente (21a, 21b), die eine Stand-by-Schaltung (21a, 21b) der elektrischen Vorrichtung (2a, 2b) ist und quasi kontinuierlich betrieben wird und wenigstens eine weitere funktionale Komponente (22a, 22b), die als Wechselspannungskomponente ausgeführt ist, aufweisen, wobei jeweils die Stand-by-Schaltung (21a, 21b) im Bereitschaftsbetrieb über eine Gleichspannungsquelle (3) mit Energie versorgt wird und die Stand-by-Schaltung (21a, 21b) den Betrieb der wenigsten einen Wechselspannungskomponente (22a, 22b) startet und beendet, **dadurch gekennzeichnet, dass** die Gleichspannungsquelle (3) eine zentrale Gleichspannungsquelle (3) ist und einen Gleichspannungserzeuger in der Form einer erneuerbaren Energiequelle (14, 15), der ausgebildet ist, um unmittelbar eine Gleichspannung zur Versorgung der Stand-by-Schaltung (21a, 21b) der elektrischen Vorrichtungen (2a, 2b) zu erzeugen, und einen Energiespeicher (16, 16a) aufweist, und die elektrischen Vorrichtungen jeweils einen nach außen geführten Anschluss für Gleichspannung aufweisen, über den die Stand-by-Schaltung (21a, 21b) mit der Gleichspannungsquelle (3) verbunden ist, und das Versorgungssystem (1) ein gemeinsames Leitungssystem (7) für eine Wechselspannung aus einer zentralen Wechselspannungsquelle (4) aufweist und die elektrischen Anschlüsse für die Gleich- (6) und die Wechselspannung (8) gemäß der Verteilung (5, 7) jeweils benachbart angeordnet sind.

7. Versorgungssystem (1) gemäß Anspruch 6, **dadurch gekennzeichnet, dass** der Gleichspannungserzeuger Solarkollektoren (14) und/oder eine Kleinwindkraftanlage (15) umfasst.

8. Versorgungssystem (1) gemäß einem der Ansprüche 6 oder 7, **dadurch gekennzeichnet, dass** der Energiespeicher (16, 16a) der Gleichspannungsquelle (3) einen Akkumulator (16) aufweist, wobei insbesondere die zentrale Gleichspannungsquelle (3) eine Steuerungsvorrichtung (18, 18a) umfasst, welche die Speicherung von Energie in dem Energiespeicher (16, 16a) und deren Abgabe daraus steuert.

9. Versorgungssystem (1) gemäß einem der Ansprüche 6 bis 8, **dadurch gekennzeichnet, dass** das Versorgungssystem (1) innerhalb einer Versorgungseinheit, die z.B. eine Wohnung, ein Haus oder ein Gebäudekomplex sein kann, vorgesehen ist und durch ein gemeinsames elektrisches Leitungssystem (5) für eine Gleichspannung die Gleichspannungsquelle (3) mit einer Mehrzahl von Anschlüssen für Gleichspannung (6) verbindet.

10. Versorgungssystem nach einem der Ansprüche 6 bis 9, **dadurch gekennzeichnet, dass** die elektrischen Anschlüsse für die Gleich- (6) und Wechselspannung (8) jeweils in einem gemeinsamen Steckadapter (9, 10) angeordnet sind.

11. Elektrische Vorrichtung (2a, 2b), insbesondere der Unterhaltungselektronik, mit wenigstens einer funktionalen Gleichspannungskomponente (21a, 21b), die eine Stand-by-Schaltung (21a, 21b) der elektrischen Vorrichtung (2a, 2b) ist und quasi kontinuierlich betreibbar ist und wenigstens einer weiteren funktionalen Komponente (22a, 22b), die als Wechselspannungskomponente ausgeführt ist, wobei die Stand-by-Schaltung (21a, 21b) derart ausgestaltet ist, dass sie im Bereitschaftsbetrieb über eine Gleichspannungsquelle (3) mit Energie versorgt wird und den Betrieb der wenigsten einen Wechselspannungskomponente (22a, 22b) starten und beenden kann, wobei die Vorrichtung (2a, 2b, 2c) einen nach außen geführten Anschluss für Wechselspannung aufweist, über den sie an eine Wechselspannungsquelle (4) anschließbar ist, **dadurch gekennzeichnet, dass** die elektrische Vorrichtung (2a, 2b) zusätzlich einen nach außen geführten Anschluss für Gleichspannung aufweist, über den die Stand-by-Schaltung (21a, 21b) mit einer zentralen externen Gleichspannungsquelle (3) mit einem Gleichspannungserzeuger in der Form einer erneuerbaren Energiequelle (14, 15) und einem Energiespeicher (16, 16a) verbindbar ist, um durch eine von dem Gleichspannungserzeuger unmittelbar erzeugte Gleichspannung versorgt werden zu können, und die Stand-by-Schaltung (21a, 21b) derart umschaltbar ist, dass sie im Bereitschaftsbetrieb mit dem Anschluss für die Gleichspannung verbunden ist.

12. Elektrische Vorrichtung (2a, 2b, 2c) gemäß Anspruch 11, **dadurch gekennzeichnet, dass** der Anschluss an die Wechselspannung eine Schaltvorrichtung (23a, 23b) aufweist, die den Anschluss trennt oder verbindet, wobei die Schaltvorrichtung (23a, 23b) über die Stand-by-Schaltung (21a, 21b) betätigbar ist, wobei insbesondere die Stand-by-Schaltung (21a, 21b) eine Empfangs- und Dekodiereinrichtung für den Empfang von Fernsteuersignalen aufweist und bei Empfang bestimmter Signale die Schaltvorrichtung (23a, 23b) betätigt.

13. Elektrische Vorrichtung (2a, 2b, 2c) gemäß Anspruch 10, **dadurch gekennzeichnet, dass** die Wechselspannungskomponente (22b) einen Gleichspannungsversorger (24) mit einem Transformator und einem Gleichrichter aufweist und die elektrische Vorrichtung (2b) mit einer Umschaltvorrichtung (25) ausgeführt ist, wobei die Spannungsversorgung der Gleichspannungskomponente (21b) mit der Umschaltvorrichtung (25) im Anschluss der Gleichspannungskomponente (21b) zwischen der zentralen Gleichspannungsquelle (3) und dem Gleichspannungsversorger (24) der Wechselspannungskomponente (22b) umschaltbar ist.

14. Elektrische Vorrichtung (2a, 2b) gemäß einem der Ansprüche 11 bis 13, **dadurch gekennzeichnet, dass** eine Gleichspannungskomponente in Form einer Kontakt- und Ladevorrichtung (21c) vorgesehen ist, über die elektrische Akkumulatoren, insbesondere von oder in Mobil- und/oder Fernsteuergeräten, ladbar sind.

## Claims

1. A method for the operation of multiple independent electrical apparatuses (2a, 2b), in particular electronic entertainment devices, the electrical apparatuses (2a, 2b) respectively having at least one functional direct current voltage component which is a stand-by circuit (21 a, 21b) of the electrical apparatus (2a, 2b) and is operated almost continuously, and at least one further functional component (22a, 22b) which is in the form of an alternating current voltage component, the stand-by circuit (21 a, 21 b) being respectively supplied with energy by a direct current voltage source (3) in stand-by mode, and the stand-by circuit (21 a, 21 b) starting and ending the operation of the at least one alternating current voltage component (22a, 22b), **characterised in that** a central direct current voltage source (3) with a direct current voltage generator in the form of a renewable energy source (14, 15) and with an energy store (16, 16a) is used as a direct current voltage source (3), and the stand-by circuit (21 a, 21 b) is supplied by an outwardly directed connection for direct current voltage with direct current voltage generated directly by the direct current voltage generator.

2. The method according to Claim 1, **characterised in that** a photovoltaic solar collector (14) and/or a small wind energy plant (15) is used as a direct current voltage generator.

3. The method according to either of Claims 1 or 2, **characterised in that** the further functional component (22b) has a direct current voltage supplier (24) which is connected to the direct current voltage component (21 b), the direct current voltage component (21 b) only being supplied by the central direct current voltage source (3) in a first operating mode in which it is exclusively operated, and in a second operating mode, in which the alternating current voltage component (22b) is also operated, being operated on the direct current voltage supplier (24).

4. The method according to any of the preceding claims, **characterised in that** the electrical apparatuses (2a, 2b) are supplied in a closed supply unit, in particular an apartment, a house or a complex of buildings, via a central direct current voltage source (3) assigned to the supply unit and a central alternating current voltage source (4), both voltage sources (3, 4) being connectable to the electrical apparatuses (2a, 2b) by means of a common electrical line system (5, 7) in the supply unit.

5. The method according to any of the preceding claims, **characterised in that** the line system is designed in parallel for the direct (5) and the alternating current voltage (7), and connections for alternating (8) and direct current voltage (6) are respectively located adjacent to one another, the direct and the alternating current voltage being provided in particular in a common connection, and the electrical apparatuses (2a, 2b) being supplied with direct and alternating current voltage via a single connection.

6. A supply system (1) for the operation of multiple independent electrical apparatuses (2a, 2b), the electrical apparatuses (2a, 2b) respectively having at least one functional direct current voltage component (21 a, 21 b) which is a stand-by circuit (21 a, 21 b) of the electrical apparatus (2a, 2b) and is operated almost continuously, and at least one further functional component (22a, 22b) which is in the form of an alternating current voltage component, the stand-by circuit (21a, 21b) being supplied respectively with energy by a direct current voltage source (3) in stand-by mode, and the stand-by circuit (21a, 21 b) starting and ending the operation of the at least one alternating current voltage component (22a, 22b), **characterised in that** the direct current voltage source (3) is a central direct current voltage source (3) and has a direct current voltage generator in the form of a renewable energy source (14, 15) which is designed to generate a direct current voltage directly to supply the stand-by circuit (21 a, 21 b) of the electrical apparatuses (2a, 2b), and an energy store (16, 16a), and the electrical apparatuses respectively have an outwardly directed connection for direct current voltage by means of which the stand-by circuit (21 a, 21 b) is connected to the direct current voltage source (3), and the supply system (1) has a common line system (7) for an alternating current voltage from a central alternating current voltage source (4) and the electrical connections for the direct (6) and the alternating current voltage (8) are arranged respectively adjacent to one another depending on the distribution (5, 7).

7. The supply system (1) according to Claim 6, **characterised in that** the direct current voltage generator comprises solar collectors (14) and/or a small wind energy plant (15).

8. The supply system (1) according to either of Claims 6 or 7, **characterised in that** the energy store (16, 16a) of the direct current voltage source (3) has an accumulator (16), the central direct current voltage source (3) in particular comprising a control apparatus (18, 18a) which controls the storage of energy in the energy store (16, 16a) and delivery of energy from the latter.

9. The supply system (1) according to any of Claims 6 to 8, **characterised in that** the supply system (1) is provided within a supply unit which can be e.g. an apartment, a house or a complex of buildings, and connects the direct current voltage source (3) to multiple connections for direct voltage current (6) by means of a common electric line system (5) for a direct voltage current.

10. The supply system according to any of Claims 6 to 9, **characterised in that** the electrical connections for the direct (6) and alternating current voltage (8) are respectively located in a common plug adapter (9, 10).

11. An electrical apparatus (2a, 2b), in particular an electronic entertainment apparatus, comprising at least one functional direct current voltage component (21a, 21 b) which is a stand-by circuit (21a, 21 b) of the electrical apparatus (2a, 2b) and can be operated almost continuously, and at least one further functional component (22a, 22b) which is in the form of a alternating current voltage component, the stand-by circuit (21 a, 21 b) being configured such that it is supplied with energy by a direct current voltage source (3) in stand-by mode, and can start and end the operation of the at least one alternating current voltage component (22a, 22b), the apparatus (2a, 2b) having an outwardly directed connection for alternating current voltage by means of which it can be connected to an alternating current voltage source (4), **characterised in that** the electrical apparatus (2a, 2b) additionally has an outwardly directed connection for direct current voltage by means of which the stand-by circuit (21 a, 21 b) can be connected to a central external direct voltage current source (3) with a direct current voltage generator in the form of a renewable energy source (14, 15) and with an energy store (16, 16a) in order to be able to be supplied by a direct current voltage directly generated by the direct current voltage generator, and the stand-by circuit (21 a, 21 b) can be switched over such that it is connected to the connection for the direct current voltage in the stand-by mode.

12. The electrical apparatus (2a, 2b, 2c) according to Claim 11, **characterised in that** the connection to the alternating current voltage has a switching apparatus (23a, 23b) which breaks or makes the connection, the switching apparatus (23a, 23b) being controlled by means of the stand-by circuit (21 a, 21 b), the stand-by circuit (21 a, 21 b) having in particular a receiving and decoding device for the receipt of remote control signals and actuating the switching apparatus (23a, 23b) upon receiving specific signals.

13. The electrical apparatus (2a, 2b, 2c) according to Claim 10, **characterised in that** the alternating current voltage component (22b) has a direct current voltage supplier (24) with a transformer and a rectifier, and the electrical apparatus (2b) is designed with a switch-over apparatus (25), the voltage supply to the direct current voltage component (21b) being switchable with the switch-over apparatus (25) when connected to the direct current voltage component (21 b) between the central direct current voltage source (3) and the direct current voltage supplier (24) of the alternating current voltage component (22b).

14. The electrical apparatus (2a, 2b) according to any of Claims 11 to 13, **characterised in that** a direct current voltage component is provided in the form of a contact and charging apparatus (21c) by means of which the electrical accumulators can be charged, in particular from or in mobile and/or remote control devices.

## Revendications

1. Procédé pour le fonctionnement de plusieurs dispositifs électriques indépendants (2a, 2b), notamment d'appareils de l'électronique grand public, sachant que les dispositifs électriques (2a, 2b) présentent respectivement au moins une composante continue fonctionnelle, qui est un circuit standby (21 a, 21 b) du dispositif électrique (2a, 2b) et est utilisé presque en continu et au moins une autre composante fonctionnelle (22a, 22b), qui est exécutée en tant que composante alternative, sachant que le circuit standby correspondant (21 a, 21 b) en mode d'attente est alimenté en énergie par une source de tension continue (3) et le circuit standby (21a, 21b) démarre et stoppe le fonctionnement de la au moins une composante alternative (22a, 22b), **caractérisé en ce qu'**en tant que source de tension continue (3), on utilise une source de tension continue centrale (3) avec un générateur de tension continue sous la forme d'une source d'énergie renouvelable (14, 15) et un réservoir d'énergie (16, 16a) et le circuit standby (21a, 21b) est alimenté en tension continue produite directement par le générateur de tension continue par un raccordement conduit vers l'extérieur pour la tension continue.

2. Procédé selon revendication 1, **caractérisé en ce qu'**en tant que générateur de tension continue, on utilise un capteur solaire photovoltaïque (14) et/ou une petite éolienne (15).

3. Procédé selon l'une des revendications 1 ou 2, **caractérisé en ce que** l'autre composante fonctionnelle (22b) présente un circuit d'alimentation en tension continue (24) qui est relié à la composante continue (21 b) sachant que la composante continue (21b) est alimentée par la source de tension continue centrale (3) uniquement dans un premier mode de fonctionnement dans lequel elle est exclusivement utilisée et dans un deuxième mode de fonctionnement dans lequel la composante alternative (22b) est aussi utilisée, et est utilisée sur le circuit d'alimentation en tension continue (24).

4. Procédé selon l'une des revendications précédentes, **caractérisé en ce que** les dispositifs électriques (2a, 2b) sont alimentés dans une unité fermée d'alimentation notamment une habitation, une maison ou un bâtiment par une source de tension continue centrale (3) affectée à l'unité d'alimentation et une source de tensions alternative centrale (4), sachant que les deux sources de tension (3, 4) peuvent être reliées aux dispositifs électriques (2a, 2b) par un système de ligne (5, 7) électrique commun dans l'unité d'alimentation.

5. Procédé selon l'une des revendications précédentes, **caractérisé en ce que** le système de ligne est exécuté en parallèle pour la tension continue (5) et la tension alternative (7) et des raccordements pour la tension alternative (8) et la tension continue (6) sont respectivement placés à proximité, sachant notamment que la tension continue et la tension alternative sont mises en place dans un raccordement commun et les dispositifs électriques (2a, 2b) sont alimentés en tension continue et tension alternative par une liaison unique.

6. Système d'alimentation (1) pour le fonctionnement de plusieurs dispositifs électriques indépendants (2a, 2b) sachant que les dispositifs électriques (2a, 2b) présentent respectivement au moins une composante continue fonctionnelle (21a, 21b) qui est un circuit standby (21a, 21b) du dispositif électrique (2a, 2b) et est utilisée presque en continu et au moins une autre composante fonctionnelle (22a, 22b) qui est exécutée en tant que composante alternative, sachant que le circuit standby (21 a, 21 b) en mode d'attente est alimenté en énergie par une source de tension continue (3) et le circuit standby (21 a, 21 b) démarre et stoppe le fonctionnement de la au moins une composante alternative (22a, 22b), **caractérisé en ce que** la source de tension continue (3) est une source de tension continue centrale (3) et présente un générateur de tension continue sous la forme d'une source d'énergie renouvelable (14, 15) qui est conçu pour produire directement une tension continue pour l'alimentation du circuit standby (21 a, 21 b) des circuits électriques (2a, 2b) et un réservoir d'énergie (16, 16a) et les dispositifs électriques présentent respectivement un raccordement mené vers l'extérieur pour la tension continue par lequel le circuit standby (21a, 21b) est relié à la source de tension continue (3) et le système d'alimentation (1) présente un système de ligne (7) commun pour une tension alternative provenant d'une source de tension alternative centrale (4) et les raccordements électriques sont placés respectivement à proximité pour la tension continue (6) et la tension alternative (8) conformément à la distribution (5, 7).

7. Système d'alimentation (1) selon revendication 6, **caractérisé en ce que** le générateur de tension continue comprend des capteurs solaires (14) et/ou une petite éolienne (15).

8. Système d'alimentation (1) selon l'une des revendications 6 ou 7, **caractérisé en ce que** le réservoir d'énergie (16, 16a) de la source de tension continue (3) présente un accumulateur (16), sachant notamment que la source tension continue centrale (3) comprend un dispositif de commande qui commande l'accumulation d'énergie dans le réservoir d'énergie (16, 16a) et son dégagement.

9. Système d'alimentation selon l'une des revendications 6 à 8, **caractérisé en ce que** le système d'alimentation (1) est prévu à l'intérieur d'une unité d'alimentation qui peut être par exemple une habitation, une maison ou un bâtiment, et relie par un système électrique de ligne commun (5) pour une tension continue, la source de tension continue (3) avec plusieurs raccordements pour tension continue (6).

10. Système d'alimentation selon l'une des revendications 6 à 9, **caractérisé en ce que** les raccordements électriques pour la tension continue (6) et alternative (8) sont respectivement placés dans un adaptateur d'enfichage (9, 10) commun.

11. Dispositif électrique (2a, 2b) notamment de l'électronique grand public avec au moins une composante continue fonctionnelle (21 a, 21 b) qui est un circuit standby (21 a, 21 b) du dispositif électrique (2a, 2b) et peut être presque utilisé en continu et avec au moins une autre composante fonctionnelle (22a, 22b) qui est exécutée en tant que composante alternative, sachant que le circuit standby (21 a, 21 b) est formé de telle manière qu'il est alimenté en énergie en mode attente par une source de tension continue (3) et peut démarrer et stopper le fonctionnement de la au moins une composante alternative (22a, 22b) sachant que el dispositif (2a, 2b, 2c) présente un raccordement mené vers l'extérieur pour la tension alternative, par lequel il peut être raccordé à une source de tension alternative (4), **caractérisé en ce que** le dispositif électrique (2a, 2b) présente en plus un raccordement mené vers l'extérieur pour la tension continue, par lequel le circuit standby (21 a, 21 b) peut être relié à une source de tension continue (3) externe centrale avec un générateur de tension continue sous la forme d'une source de d'énergie renouvelable (14, 15) et un réservoir d'énergie (16, 16a) pour pouvoir être alimenté par une tension continue produite directement par le générateur de tension continue et le circuit standby (21 a, 21b) peut être commuté de telle manière qu'il est relié en mode attente au raccordement pour la tension continue.

12. Dispositif électrique (2a, 2b, 2c) selon revendication 11, **caractérisé en ce que** le raccordement à la tension alternative présente un dispositif de coupure du courant (23a, 23b) qui coupe pour relie le raccordement sachant que le dispositif de coupure du courant (23a, 23b) peut être actionné par le circuit standby (21 a, 21 b) sachant notamment que le circuit standby (21a, 21 b) présente un récepteur et un décodeur pour la réception de signaux télécommandés et lors de la réception de certains signaux actionne le dispositif de coupure du courant (23a, 23b).

13. Dispositif électrique (2a, 2b ,2c) selon revendication 10, **caractérisé en ce que** la composante alternative (22b) présente un circuit d'alimentation en tension continue (24) avec un transformateur et un redresseur et le dispositif électrique (2b) est réalisé avec un dispositif de commutation (25), sachant que l'alimentation en tension de la composante continue (21b) peut être commutée avec le dispositif de commutation (25) dans le raccordement de la composante continue (21 b) entre la source de tension continue centrale (3) et le circuit d'alimentation en tension continue (24) de la composante alternative (22b).

14. Dispositif électrique (2a, 2b) selon l'une des revendications 11 à 13, **caractérisé en ce qu'**une composante continue est prévue sous la forme d'un dispositif de chargement et de contact (21 c) par lequel des accumulateurs électriques, notamment de ou dans des appareils mobiles et/ou télécommandés, peuvent être chargés.
